# EUROPÄISCHE PATENTSCHRIFT

(11) **EP 1 697 029 B1**
(45) Veröffentlichungstag und Bekanntmachung des Hinweises auf die Patenterteilung: **06.02.2008**
(21) Anmeldenummer: 04797687.3
(22) Anmeldetag: 06.11.2004
(51) Int. Cl.: B01F 15/06, B01F 15/00

(54) **VERFAHREN ZUM AUFSCHMELZEN VON GEFRORENEN, WASSERHALTIGEN PRODUKTEN**
METHOD FOR MELTING FROZEN, WATER-CONTAINING PRODUCTS
PROCEDE POUR FAIRE FONDRE DES PRODUITS CONGELES CONTENANT DE L'EAU

(30) Priorität: 19.11.2003 DE 10354109
(43) Veröffentlichungstag der Anmeldung: 06.09.2006
(73) Patentinhaber: Bayer Technology Services GmbH, 51368 Leverkusen (DE)
(72) Erfinder: EBLE, Axel, 50733 Köln (DE); RITTER, Joachim, 51373 Leverkusen (DE); SCHMIDT, Dieter, 51381 Leverkusen (DE)
(86) Internationale Anmeldenummer: PCT/EP2004/012589
(87) Internationale Veröffentlichungsnummer: WO 2005/049188

(56) Entgegenhaltungen:
- US-A- 4 714 813
- US-A1- 2002 037 345
- US-A1- 2003 108 655
- PATENT ABSTRACTS OF JAPAN Bd. 2003, Nr. 12, 5. Dezember 2003 (2003-12-05) & JP 2003 230355 A (SAKASEGAWA SEISAKUSHO:KK), 19. August 2003 (2003-08-19)
- DATABASE WPI Section Ch, Week 198032 Derwent Publications Ltd., London, GB; Class D15, AN 1980-56439C XP002316561 -& SU 704 643 A (DOMANSKII O V) 25. Dezember 1979 (1979-12-25)
- PATENT ABSTRACTS OF JAPAN Bd. 011, Nr. 150 (C-422), 15. Mai 1987 (1987-05-15) & JP 61 283338 A (MICHIO WATANABE), 13. Dezember 1986 (1986-12-13)

## Beschreibung

Die Erfindung betrifft ein Verfahren zum Aufschmelzen von gefrorenen, wasserhaltigen Produkten, insbesondere von proteinhaltigen Produkten, unter Verwendung eines Mischers mit horizontalen Einbauten.

In der US-A-4 714 813 ist ein Verfahren zum verbessertem Auftauen von Produkten in einem Mikrowellenofen beschrieben.

Das Verfahren ist geeignet zum schonenden Aufschmelzen von Eis auf Wasserbasis, das insbesondere sowohl mechanisch als auch thermisch empfindliche Substanzen enthält.

Vor allem biologische Produkte, die nur in Kleinmengen produziert werden können, müssen vor einer Weiterverarbeitung zwischengelagert werden. Dies geschieht üblicherweise durch Tiefkühlen, um die Qualität des Produktes während des Lagerns zu erhalten. Das kontrollierte Auftauen der Produkte dient nicht zuletzt dem Zweck der Vereinheitlichung der Produkteigenschaften, die gerade bei biologischen Produkten von Charge zu Charge stark variieren können. Zur Erzielung einer kleinen Schwankungsbreite der Produkteigenschaften müssen häufig mehrere 100 bis zu einigen 1000 Chargen gemeinsam aufgetaut und miteinander vermischt werden.

Dies geschieht häufig in vertikalen Rührbehältern mit Mantelheizung, weil bei einem Antrieb des Rührwerks von oben so keine Dichtung von Produkt berührt ist. Die Eisstücke werden aus den Lagerbehältern entnommen und dem Rührbehälter zugeführt. Ein Zerkleinern der Eisstücke ist aus hygienischen Gründen oft nicht ratsam. Häufig sind auch keinerlei Zusätze erforderlich oder sogar zulässig, so dass der Aufschmelzprozess im Rührbehälter anfangs ohne flüssige Phase stattfindet. Die Eisstücke werden vom Rührorgan in Rotation versetzt und gleiten an der beheizten Behälterwand entlang. Die geschmolzenen Anteile sammeln sich am Boden des Behälters. Wegen der Größe der Eisstücke im Verhältnis zum Innendurchmesser des Rührbehälters - das Verhältnis zwischen Kantenlänge und Durchmesser kann 1/10 auch überschreiten - ist der Einbau von Stromstörern nicht ratsam. Es bestünde hierbei die Gefahr des Verkantens der Eisstücke mit der Folge des mechanischen Versagens des Rührers.

Aus diesem Grunde und zur Intensivierung des Wärmeübergangs über die Wand werden gewöhnlich wandgängige Rührer, zum Beispiel Wendelrührer eingesetzt. Aufgrund der geringen Reibung zwischen Wassereis und Behälterwand durch Bildung eines Wasserfilms und der Wandgängigkeit der eingesetzten Rührer kommt es nicht zu einer Vermischung der Eisstücke untereinander. In extremen Fällen kann es aber sogar dazu kommen, dass an den Außenflächen bereits vorher angetaute Eisstücke, die innen noch tiefgefroren sind, zusammenfrieren und eine mit dem Rührorgan mitrotierende zusammenhängende Masse ohne jegliche Relativbewegung bilden. An der Wand schmelzen die die Wand berührenden Eisstücke ab, bis sich ein einige Millimeter breiter Luftspalt gebildet hat. Neue Kontaktflächen werden bei dieser Verfahrensweise kaum gebildet, so dass der Auftauprozess länger dauert. Währenddessen werden die bereits aufgetauten Anteile über lange Zeit einem hohen thermischen Stress ausgesetzt, was die Produkteigenschaften in unerwünschter Weise beeinflussen kann.

In jedem Falle schwimmen die Eisstücke aufgrund ihrer niedrigeren Dichte im Vergleich zum geschmolzenen Gut an der Oberfläche auf. Die schon erwähnte geringe Wandreibung führt dazu, dass der für eine axiale Förderung erforderliche Impulsstrom nicht eingetragen werden kann. Eine Zweiteilung aus geschmolzenem Anteil im unteren Bereich und noch festen, mit dem Rührorgan mitrotierenden Eisstücken im oberen Bereich ist die Folge. Der Wärmeaustausch zwischen diesen beiden Bereichen ist durch die fehlende axiale Förderung der Eistücke behindert, was zur Folge hat, dass das geschmolzenen Produkt über einen langen Zeitraum einem hohen thermischen Stress ausgesetzt wird.

Aufgabe der Erfindung war es, den Aufschmelzprozess mechanisch und thermisch instabiler Substanzen in wässrigen Lösungen zu beschleunigen und mechanischen und thermischen Stress möglichst zu vermeiden. Dabei war besonders darauf zu achten, dass bei hoher Raum-ZeitAusbeute bei niedrigem spezifischen Leistungseintrag durch kleine Rührerdrehzahlen trotzdem lokale Überhitzungen durch Separation von fester und flüssiger Phase vermieden werden.

Die Aufgabe wird gelöst durch ein Verfahren, welches durch den Einsatz eines Horizontalmischers die Separation der beiden Phasen verhindert, indem die Rührelemente nun keine Rotation um eine vertikale Achse ausführen, sondern eine vertikale Vermischung ermöglichen.

Gegenstand der Erfindung ist ein Verfahren zum Auftauen von gefrorenen, wasserhaltigen Produkten, insbesondere proteinhaltigen Produkten, durch Einbringen des gefrorenen Produktes in einen Horizontalmischer, Heizen des Mischers und gleichzeitig intensives Umwälzen des Mischerinhaltes, wobei eventuell aufschwimmendes gefrorenes Produkt ständig in die verflüssigte Phase untergetaucht und mit dieser vermischt wird.

Bevorzugt ist ein Verfahren, bei dem die Vermischung durch Heizung solange durchgeführt wird, bis das Produkt vollständig aufgeschmolzen ist.

Bevorzugt ist weiterhin ein Verfahren, bei dem dem Horizontalmischer kontinuierlich gefrorenes Produkt zugegeben, die Vermischung und Beheizung kontinuierlich durchgeführt wird und in gleichem Maße aufgetautes Produkt entzogen wird, so dass sich ein stationärer Zustand einstellt. Ein solches kontinuierliches Verfahren hat den Vorteil, dass die Temperaturführung vereinfacht und die Verweilzeit verkürzt und somit die thermische Belastung des Produktes verringert ist.

Horizontalmischer im Sinne der Erfindung ist eine dynamische Mischvorrichtung mit einem Rührwerk (bewegliche Einbauten), dessen Drehachse oder Drehachsen, im Falle von mehreren Rührwellen im Wesentlichen horizontal angeordnet sind. Hierunter wird auch eine Vorrichtung fallen, deren Drehachse der Rührwellen unter einem Winkel von mindestens 45° zur Vertikalen angeordnet ist.

Bevorzugt ist ein Verfahren, bei als Horizontalmischer ein Scheibenmischer, Pflugscharmischer, oder Becker-Mischer verwendet wird.

Weiter bevorzugt ist ein Verfahren, bei dem als Horizontalmischer Mischelemente mit interner Heizung eingesetzt werden.

Besonders bevorzugt wird in dem Verfahren ein Horizontalmischer verwendet, der wandgängige Abstreifelemente aufweist, insbesondere ein Mischer mit einem Selbstreinigungsgrad von mindestens 80 %.

Weiter bevorzugt ist ein Verfahren, in dem als wasserhaltiges Produkt proteinhaltige Lösungen und Suspensionen aus natürlichen biologischen Quellen oder aus biologischen Verfahren, besonders bevorzugt Blutplasma, eingesetzt werden.

Besonders bevorzugt wird in dem Verfahren zum Auftauen von Blutplasma oder Blutplasmaprodukten die Temperatur der Mischung während des gesamten Prozesses weniger als 10°C oberhalb des Schmelzpunktes, bevorzugt weniger als 5°C oberhalb des Schmelzpunktes, gehalten.

Das Verfahren kann sowohl batchweise als auch kontinuierlich durchgeführt werden.

Im kontinuierlichen Betrieb wird vollständig geschmolzenes Produkt aus dem Mischer abgezogen und gefrorenes Produkt absatzweise nachgefüllt.

Das kontinuierliche Verfahren vermindert die Verweilzeit der Produkte in der Aufschmelzzone und ist für die Behandlung besonders empfindlicher Produkte besonders geeignet.

Mit der Erfindung wird erreicht, dass einerseits aufgeschwommene Eisstücke aus der Oberfläche der Schmelze nach oben gefördert und durch die Schwerkraft stochastisch an andere Stellen des Mischers gefördert werden. Andererseits werden sie nach unten in die geschmolzene und sich aufwärmende Phase gedrückt. Durch die erzwungene vertikale Relativbewegung der gefrorenen Produkte wird der Wärmeübergang zwischen Gefrorenem und flüssiger Phase wesentlich verbessert. Das führt auch zu höheren Temperaturgradienten an der Wand und damit zu einer insgesamt kürzeren Aufschmelzzeit gegenüber den aus dem Stand der Technik bekannten Verfahren.

### Beispiele

### Beispiel 1

Wassereis in Zylinderform mit Volumina von ca. 20 ml wurde in ein zylindrisches Gefäß mit einem Durchmesser von 200 mm und Mantelheizung gefüllt. Die Füllgrade wurden zwischen 40 und 100% variiert. Dabei entsprechen 100% Füllgrad der maximalen Befüllung mit Wassereis im gefrorenem Zustand. Zunächst wurde der Behälter vertikal, dann horizontal betrieben. Die Mischerdrehzahl wurde bei allen Versuchen bei konstant 30 min^-1 gehalten. Die Mantelheizung wurde auf jeweils 20 bzw 30°C Wassertemperatur gestellt. Mit einem Temperaturfühler im zylindrischen Gefäß wurde der Auftauvorgang beobachtet. Bei vertikaler Betriebsweise kam es zu ungenügendem vertikalem Austausch zwischen Flüssigkeit und Eis mit der Folge langer Auftauzeiten. Die relevante Auftauzeit wurde durch das Erreichen einer bestimmten Temperatur, gemessen vom Temperaturfühler im zylindrischen Gefäß, bestimmt. Bei horizontaler Betriebsweise wurde durch die vertikale Bewegung der Mischerblätter eine gute Vermischung zwischen bereits getautem Wasser und noch gefrorenem Eis erzielt. Die zur Verfügung stehende Heizfläche war bei vertikalem Betrieb stets größer als bei horizontalem. Bei 40% Füllgrad ließen sich die gemessenen Auftauzeiten halbieren. Bei maximalem Füllgrad wurden die Auftauzeiten um einen Faktor <0,8 gesenkt. Die signifikante Verringerung der Auftauzeit ist die Folge der besseren Durchmischung bei horizontaler Betriebsweise, weil hierdurch der innere Wärmeübergangskoeffizient bei konstanter Temperaturdifferenz erhöht wird und die Verringerung der Wärmeaustauschfläche mehr als kompensiert werden kann.

### Beispiel 2

In einem zweiten Versuch wurde gefrorenes humanes Blutplasma in Stücken von ca. 50 ml in denselben Versuchsbehälter gegeben und unter sonst identischen Bedingungen aufgetaut. Die Temperaturkurven zeigten bei Füllgraden von 70% den gleichen signifikanten Effekt der Halbierung der Auftauzeiten. Neben den Temperaturkurven wurde die Aktivität eines Proteins (Faktor VIII), welches während des Auftauprozesses ausfällt, analysiert. Durch die kürzeren Auftauzeiten und den geringeren thermischen Stress durch das homogenere Temperaturfeld im Zylindergefäß ergaben sich bei horizontalem Betrieb Aktivitätssteigerungen von in der Regel 20% und mehr im Vergleich zum vertikalen Betrieb.

## Patentansprüche

1. Verfahren zum Auftauen von gefrorenen, wasserhaltigen Produkten, durch Einbringen des gefrorenen Produktes in einen Horizontalmischer, **gekennzeichnet durch** Heizen des Mischers und gleichzeitiges intensives Umwälzen des Mischerinhaltes, wobei aufschwimmmendes gefrorenes Produkt ständig in die verflüssigte Phase untergetaucht und mit dieser vermischt wird.

2. Verfahren nach Anspruch 1, **dadurch gekennzeichnet, dass** als Horizontalmischer ein Scheibenmischer, Pflugscharmischer oder Beckermischer verwendet wird.

3. Verfahren nach den Ansprüchen 1 und 2, **dadurch gekennzeichnet, dass** Mischelemente mit interner Heizung eingesetzt werden.

4. Verfahren nach einem der Ansprüche 1 oder 2, **dadurch gekennzeichnet, dass** der Horizontalmischer wandgängige Abstreifelemente aufweist.

5. Verfahren nach einem der Ansprüche 1 bis 4, **dadurch gekennzeichnet, dass** das gefrorene Produkt ein proteinhaltiges Produkt aus natürlichen biologischen Quellen oder aus einem biologischen Verfahren ist.

6. Verfahren nach Anspruch 4, **dadurch gekennzeichnet, dass** die Temperatur der Mischung während des gesamten Prozesses weniger als 10°C oberhalb des Schmelzpunktes der Hauptkomponente, bevorzugt weniger als 5°C oberhalb des Schmelzpunktes der Hauptkomponente, gehalten wird.

7. Verfahren nach Anspruch 1 bis 4, **dadurch** gekennzeichent, dass der Horizontalmischer kontinuierlich betrieben wird.

## Claims

1. Method of thawing frozen, water-containing products by introducing the frozen product into a horizontal mixer, **characterized by** heating the mixer and at the same time regulating the contents of the mixer intensively, with floating frozen product being continually submerged in the liquefied phase and mixed with this.

2. Method according to Claim 1, **characterized in that** a disc mixer, ploughshare mixer or Becker mixer is used as horizontal mixer.

3. Method according to Claim 1 or 2, **characterized in that** mixing elements having internal heating are used.

4. Method according to Claim 1 or 2, **characterized in that** the horizontal mixer has wiping elements travelling around the wall.

5. Method according to any of Claims 1 to 4, **characterized in that** the frozen product is a protein-containing product from natural biological sources or from a biological process.

6. Method according to Claim 4, **characterized in that** the temperature of the mixture is maintained at less than 10°C above the melting point of the main component, preferably less than 5°C above the melting point of the main component, during the entire process.

7. Method according to any of Claims 1 to 4, **characterized in that** the horizontal mixer is operated continuously.

## Revendications

1. Procédé de décongélation de produits congelés contenant de l'eau par introduction du produit congelé dans un mélangeur horizontal, **caractérisé par** le chauffage du mélangeur et simultanément une mise en circulation intensive du contenu du mélangeur, le produit congelé surnageant étant en continu plongé dans la phase liquéfiée et mélangé avec celle-ci.

2. Procédé suivant la revendication 1, **caractérisé en ce qu'**on utilise comme mélangeur horizontal un mélangeur à disques, un mélangeur à soc de charrue ou un mélangeur Becker.

3. Procédé suivant les revendications 1 et 2, **caractérisé en ce qu'**on utilise des éléments mélangeurs avec chauffage interne.

4. Procédé suivant l'une des revendications 1 ou 2, **caractérisé en ce que** le mélangeur horizontal présente des racleurs longeant les parois.

5. Procédé suivant l'une des revendications 1 à 4, **caractérisé en ce que** le produit congelé est un produit contenant des protéines de sources biologiques naturelles ou d'un procédé biologique.

6. Procédé suivant la revendication 4, **caractérisé en ce que** la température du mélange est maintenue pendant l'ensemble du processus à moins de 10°C au-dessus du point de fusion du composant principal, de préférence à moins de 5°C au-dessus du point de fusion du composant principal.

7. Procédé suivant les revendications 1 à 4, **caractérisé en ce que** le mélangeur horizontal est exploité en continu.
